# EUROPÄISCHE PATENTSCHRIFT

(11) **EP 1 133 404 B1**
(45) Veröffentlichungstag und Bekanntmachung des Hinweises auf die Patenterteilung: **26.06.2002**
(21) Anmeldenummer: 99963313.4
(22) Anmeldetag: 20.11.1999
(51) Int. Cl.: B60K 17/04

(54) **LENKBARER RADANTRIEB**
STEERABLE WHEEL DRIVE
ENTRAINEMENT DE ROUE ORIENTABLE

(30) Priorität: 27.11.1998 DE 19854781
(43) Veröffentlichungstag der Anmeldung: 19.09.2001
(73) Patentinhaber: ZF FRIEDRICHSHAFEN Aktiengesellschaft, 88038 Friedrichshafen (DE)
(72) Erfinder: MAIER, Hermann, D-94116 Hutthurm (DE); OBERMAIER, Gerhard, D-94036 Passau (DE)
(86) Internationale Anmeldenummer: EP9908913
(87) Internationale Veröffentlichungsnummer: WO0032432

(56) Entgegenhaltungen:
- EP-A- 0 562 122
- DE-A- 2 907 138
- DE-A- 4 439 360
- GB-A- 2 043 186
- US-A- 4 693 699

## Beschreibung

Die Erfindung betrifft einen Radantrieb, welcher vorzugsweise in Baumaschinen, wie Radlader und Radbagger, zum Einsatz kommt und über eine Achsbrücke mit dem Fahrzeug befestigt ist, wie nach der im Oberbegriff von Anspruch 1 näher definierten Art beschrieben.

Bei dieser Art von Radantrieb sind in den Radköpfen Planetengetriebe vorhanden, welche die Antriebsdrehzahl der Antriebswelle reduzieren. Um das Fahrzeug abbremsen zu können, weist diese Art von Antrieb Bremsen auf, welche vorzugsweise als ölgekühlte Lamellenbremsen ausgeführt sind. Diese Bremsen werden einerseits zum dynamischen Abbremsen des Fahrzeugs benutzt und andererseits, um das Fahrzeug im Arbeitseinsatz zu halten. Bei diesem Arbeitseinsatz kann es sich um einen Baggervorgang eines Baggers handeln, bei welchem die Forderung besteht, daß der Bagger während des Baggerns möglichst präzise auf dem Untergrund gebremst stehenbleibt.

Die DE 36 39 035 Al offenbart eine Antriebsachse für Fahrzeuge, bei welcher sich der Radkopf dadurch auszeichnet, daß die Lamellenbremse in dem Radkopf integriert ist und der Radkopf zur Reduzierung der Drehzahl ein Planetengetriebe aufweist. Bei dieser Antriebsachse befindet sich die Lamellenbremse zwischen dem inneren Zentralrad und dem feststehenden Hohlrad und kann somit beim Betätigen der Bremse das innere Zentralrad festhalten. Da der Planetenträger der Abtrieb ist und die Lamellenbremse das innere Zentralrad mit dem Hohlrad verbindet, führt diese Anordnung im gebremsten Zustand zu einem sehr großen Verdrehspiel am Abtrieb, da sich das Verzahnungsspiel in der Planetenstufe und das Flankenspiel der Lamellen an der Lamellenanlage aufsummiert. Bei dieser Anordnung hat das innere Zentralrad die Drehzahl des Antriebs und somit die höchste Drehzahl, während das Hohlrad, welches die Außenlamellen trägt, stillsteht. Die Innenlamellen der Lamellenbremse sind auf dem inneren Zentralrad angeordnet und erzeugen durch die sehr große Differenzdrehzahl zwischen innerem Zentralrad und Hohlrad hohe Leerlaufverluste im nicht geschlossenen Zustand.

Die DE 19 640 146 C1 offenbart einen Radkopf mit direkter Lamellenbremse, welche ein Reduzierungsgetriebe in Form eines Planetengetriebes sowie eine Lamellenbremse aufweist, welche das Hohlrad, welches gleichzeitig der Abtrieb ist, gegen die feststehende Achse bremst. Bei dieser Anordnung kann kein Verdrehspiel im abgebremsten Zustand entstehen, da jedoch die Außenlamellen mit dem rotierenden Hohlrad und die Innenlamellen drehfest mit dem Achskörper verbunden sind und somit feststehen, ist eine genügende Ölzirkulation im geöffneten Zustand und während des dynamischen Abbremsvorgangs durch die Lamellenbremse nicht möglich, so daß sich die Lamellen stark erwärmen oder überdimensioniert werden müssen.

Die DE 19 624 288 C1 offenbart eine Achse mit Bremse für einen Radbagger, bei welcher das Reduzierungsgetriebe aus einem Planetengetriebe besteht, dessen Hohlrad drehfest mit der Achse verbunden ist und dessen inneres Zentralrad den Antrieb bildet und bei welcher die Lamellenbremse zwischen dem rotierenden Planetenträger, welcher als Abtrieb dient, und der feststehenden Achse eingebaut ist. Diese Anordnung der Lamellenbremse zeichnet sich dadurch aus, daß das Verdrehspiel eliminiert wird, jedoch ist auch die Ölzirkulation durch die Lamellenbremse, welche bei dynamischer Abbremsung benötigt wird, durch die feststehenden Innenlamellen stark eingeschränkt. Indem die Lamellenbremse zwischen der Felgen-Anflanschfläche und der Lenkdrehachse angeordnet ist, benötigt dieser Antrieb einen großen Abstand zwischen Felgen-Anflanschfläche und Lenkdrehachse, welches einen großen Lenkrollhalbmesser bedingt, der zu hohen Lenkkräften führt.

Die DE 29 07 138 C2 offenbart einen Radantrieb gemäß dem Oberbegriff des Anspruchs 1, bei welchem das Reduzierungsgetriebe aus einem einstufigen Planetengetriebe besteht und die Bremse eine Lamellenbremse ist, welche sich dadurch auszeichnet, daß die Innenlamellen mit dem drehbaren Abtrieb und die Außenlamellen mit der feststehenden Achse verbunden sind und somit ein für die Bremse benötigter Ölfluß gewährleistet ist. Indem die Bremse außerhalb des Radkopfes und in Richtung Achsmitte angeordnet ist, ist es nicht möglich, in dem vorgegebenen Bauraum diese Achse als gelenkte Achse auszuführen. Indem die Lamellenbremse auf der in Richtung Achsmitte gerichteten Seite der Felgen-Anlagefläche angeordnet ist, würde ein sehr großer Abstand zwischen Felgen-Anflanschfläche und Lenkdrehachse entstehen, welches sehr hohe Lenkkräfte erforderlich machen würde.

Die unveröffentlichte Anmeldung DE 19 718 744 der Anmelderin offenbart eine Antriebsachse mit integriertem Planetengetriebe und integrierter Lamellenbremse, bei welcher die Lamellenbremse den Planetenträger, welcher als Abtrieb dient, mit dem feststehenden Achsgehäuse verbindet. Indem die Innenlamellen auf dem rotierenden Abtrieb befestigt sind, wird genügend Kühlöl durch die Lamellen im geöffneten Zustand und beim dynamischen Abbremsvorgang gefördert, um ein Überhitzen der Lamellen zu verhindern. Die Anordnung der Lamellenbremse zwischen der Felgen-Anflanschfläche und der Achsmitte erlaubt jedoch nicht, dieses System für eine gelenkte Achse zu verwenden, da ein sehr großer Abstand zwischen Felgen-Anflanschfläche und Lenkdrehachse zu sehr hohen Lenkkräften führen würde.

Der vorliegenden Erfindung liegt die Aufgabe zugrunde, einen lenkbaren Radantrieb zu schaffen, welcher sich durch eine kompakte Bauweise, geringe Lenkkräfte, sehr geringes Verdrehspiel des Abtriebs im gebremsten Zustand, niedrige Leerlaufverluste bei geöffneter Bremse, ausreichende Ölzirkulation zwischen den Lamellen und einem kleinen Lenkrollradius auszeichnet.

Die Aufgabe wird mit einem, auch die kennzeichnenden Merkmale des Hauptanspruchs aufweisenden, gattungsgemäßen Radantrieb gelöst.

Der Radantrieb weist einen Radkopf auf, welcher um eine Lenkdrehachse drehbar gelagert ist und innerhalb des Radkopfes mindestens ein Planetengetriebe und eine Lamellenbremse aufweist.Für weitere Anwendungsfälle kann der Radkopf auch starr mit der Achsbrücke verbunden werden. Die Innenlamellen der Lamellenbremse stehen in Verbindung mit dem Abtrieb, während-die Außenlamellen drehfest über ein Verbindungsteil mit dem Achsgehäuse gehalten werden. Dadurch ist gewährleistet, daß in geöffnetem Zustand und bei dynamischen Abbremsvorgängen ausreichend Kühlöl durch die Rotation der Innenlamellen durch die Lamellenbremse gefördert wird. Indem die Lamellenbremse über Verbindungsteile den Abtrieb mit dem feststehenden Achsgehäuse verbindet, wird ein ungewolltes Verdrehspiel des Abtriebs im gebremsten Zustand weitgehend verhindert. Die Lamellenbremse ist über einen mit hydraulischem Druck beaufschlagten Kolben betätigbar, wobei der Kolben in drucklosem Zustand über eine Feder bis zu einem Anschlag zurückgedrückt werden kann. Dieser Anschlag kann als manuelle oder selbstnachstellende Nachstelleinrichtung ausgeführt sein. Indem die rotierenden Lamellen dem Planetengetriebe nachgeschaltet angeordnet sind und somit einerseits die Innenlamellen mit dem Abtrieb verbunden sind und andererseits die Außenlamellen mit der feststehenden Achse in Verbindung stehen, wird eine Reduzierung der Differenzdrehzahl zwischen den Innenlamellen und den feststehenden Außenlamellen erreicht, welches zu einer Minimierung der Reibungsverluste im geöffneten Zustand der Lamellenbremse führt. Die Anordnung der Lamellenbremse und des Planetengetriebes an der von der Felgen-Anflanschfläche nach außen weisenden Seite reduziert den Abstand zwischen Felgen-Anflanschfläche und Lenkdrehachse-erheblich, so daß der Lenkrollhalbmesser minimiert wird, welches zu einer Minimierung der Lenkkräfte führt. Durch diese Anordnung ist ein kleiner Lenkrollradius realisierbar. Das Hohlrad des Planetengetriebes ist vorzugsweise dergestalt ausgeführt, daß es einerseits als Hohlrad ausgebildet ist und andererseits als Zylinder für den Betätigungskolben, welcher als Ringkolben oder als Stufenkolben ausgeführt sein kann, ausgebildet ist und die Aufnahme der Nachstelleinrichtung oder Selbstnachstelleinrichtung beinhaltet und mit einer Aufnahme zur drehfesten Halterung der Außenlamellen ausgeführt ist und drehfest mit dem Achsgehäuse verbunden ist. Der Planetenträger, welcher den Abtrieb bildet, umschließt das Planetengetriebe und die Lamellenbremse glockenförmig. Indem der Zylinder und der Kolben drehfest mit der Achse verbunden sind, ist eine Ölzuführung zum Kolben über rein statisch belastete Dichtungen möglich. In einer weiteren Ausgestaltung können spezielle Öltaschen und Ölkanäle in der Nabe zur Verbesserung der Ölversorgung der Lamellen angebracht werden.

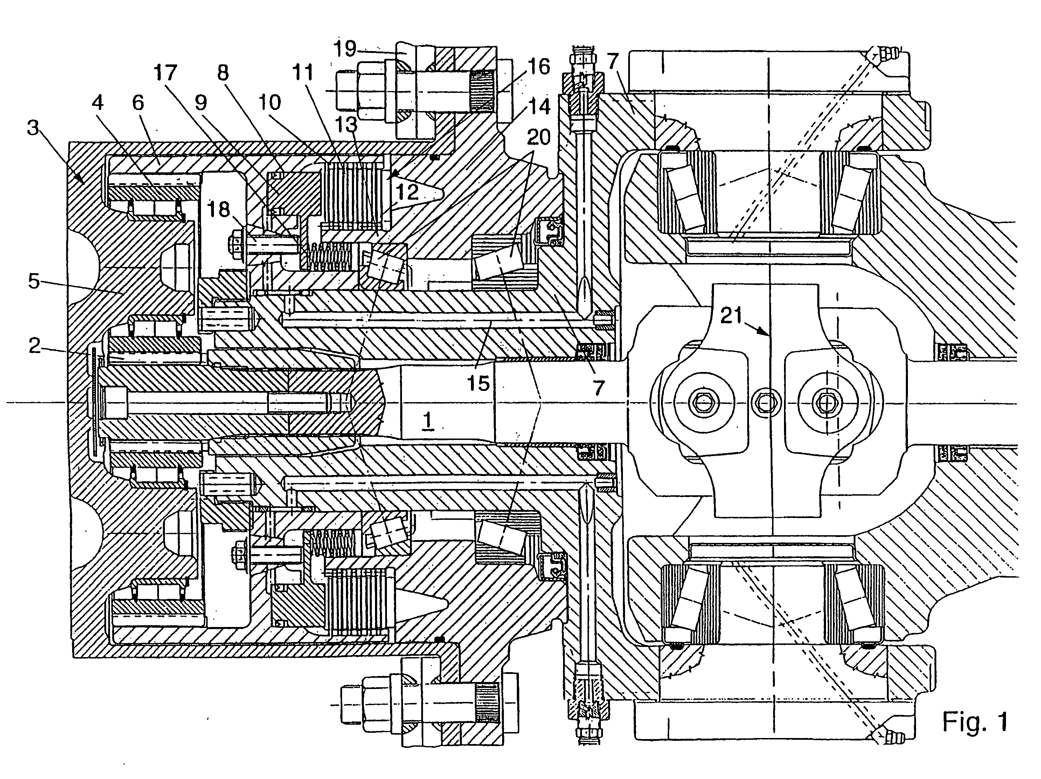

Die einzige Figur zeigt einen lenkbaren Radantrieb, bei welchem die Antriebswelle 1 mit dem inneren Zentralrad 2 eines Planetengetriebes 3 verbunden ist. Das innere Zentralrad 2 steht in kämmender Verbindung mit den Planetenrädern 4, welche auf dem Planetenträger 5 gelagert sind, der den Abtrieb bildet. Das Hohlrad 6 ist mit der feststehenden Radnabe 7 drehfest verbunden. Das Hohlrad 6 ist einerseits mit der Hohlradverzahnung und andererseits als Zylinder 8 zur Aufnahme des Kolbens 9 sowie als Lamellenträger 10 für die Außenlamellen 11 ausgeführt. Das Hohlrad 6 kann auch mehrstückig ausgeführt sein. Die Innenlamellen 12 sind auf einem Lamellenträger 13 gehalten, welcher einstückig mit dem Abtriebsflansch 14 ausgeführt ist. Der Lamellenträger 13 und der Abtriebsflansch 14 können auch mehrstückig ausgeführt sein. Wird durch eine Zuführung 15 Hydraulikmedium in den Zylinder 8 geleitet, so schließt der Kolben 9 die Lamellenbremse 16 und der Abtriebsflansch 14 wird mit der feststehenden Radnabe 7 verbunden. In diesem festgebremsten Zustand wirkt sich nur ein sehr geringes Verdrehspiel der Lamellenbremse auf den Abtrieb aus. Wird der Druck im Zylinder 8 reduziert, so drückt eine Feder 17 den Kolben 9 so weit zurück, bis der Kolben 9 an einer manuellen Nachstelleinrichtung 18 ansteht. Die Nachstelleinrichtung 18 kann auch als selbstnachstellende Einrichtung ausgeführt sein. Die Lamellenbremse 16 ist in diesem Zustand geöffnet und die Differenzdrehzahl der Außenlamellen 11 zu den Innenlamellen 12 ergibt sich aus der Abtriebsdrehzahl des Planetenträgers 5 zu der stillstehenden Radnabe 7. Da diese Differenzdrehzahl gegenüber der Differenzdrehzahl einer Lamellenbremse, bei welcher die Innenlamellen mit dem inneren Zentralrad verbunden sind, deutlich geringer ist, wird bei geöffneter Lamellenbremse ein besserer Wirkungsgrad erzielt. Der Planetenträger 5 umschließt das Planetengetriebe 3 und die Lamellenbremse 16 glockenförmig und bildet mit dem Abtriebsflansch 14 die Aufnahme der Felge 19. Die Radlagerung 20 ist im Bereich der Anflanschfläche der Felge 19 angeordnet, so daß die auftretende Radkraft direkt in die Lagerung 20 eingeleitet werden kann. Das Planetengetriebe 3 und die Lamellenbremse 16 sind in bezug auf die Lenkdrehachse 21 weiter entfernt angeordnet als die Anflanschfläche der Felge 19. Dadurch wird ein geringer Abstand zwischen Anflanschfläche der Felge 19 und der Lenkdrehachse 21 erreicht, wodurch sich durch den kleinen Lenkrollhalbmesser geringe Lenkkräfte ergeben. Indem die Innenlamellen 12 mit dem rotierenden Abtriebsflansch 14 verbunden sind, wird durch die Rotation der Innenlamellen 12 Öl zur Kühlung der Lamellenbremse 16 gefördert. Indem das Hohlrad 6 mit den Außenlamellen 11 feststeht und der Abtriebsflansch 14 mit den Innenlamellen 12 rotiert, ist es möglich, durch spezielle Gestaltung der Öltaschen und Ölkanäle die Ölversorgung zu den Lamellen zu verbessern. Da der Zylinder 8 und der Kolben 9 im Hohlrad 6, welches mit der Radnabe feststeht, verbunden sind, ist es möglich, eine Verschleißkontrolle der Lamellenbremse anzubringen. -

### Bezugszeichen

- 1: Antriebswelle
- 2: inneres Zentralrad
- 3: Planetengetriebe
- 4: Planetenräder
- 5: Planetenträger
- 6: Hohlrad
- 7: Radnabe
- 8: Zylinder
- 9: Kolben
- 10: Lamellenträger
- 11: Außenlamellen
- 12: Innenlamellen
- 13: Lamellenträger
- 14: Abtriebsflansch
- 15: Zuführung
- 16: Lamellenbremse
- 17: Feder
- 18: Nachstelleinrichtung
- 19: Felge
- 20: Lagerung
- 21: Lenkdrehachse

## Patentansprüche

1. Radantrieb mit integrierter, hydraulisch betätigbarer Lamellenbremse (16), mit Innenlamellen (12) und Außenlamellen (11), mit einer Aufnahme für ein Rad (19) mit mindestens einem Planetengetriebe (3), bei welchem ein inneres Zentralrad (2) angetrieben wird und ein Planetenträger (5) mit einem Abtriebsflansch (14) den Abtrieb bildet und einem Hohlrad (6), welches drehfest mit einer feststehenden Radnabe (7) verbunden ist, welche drehbar durch eine Lenkdrehachse (21) angeordnet ist, wobei die Innenlamellen (12) mit dem drehbaren Abtriebsflansch (14) und die Außenlamellen (11) mit der Radnabe (7) in Verbindung stehen, **dadurch gekennzeichnet, daß** die Anlage des Rades (19) zwischen der Lamellenbremse (16) und der Lenkdrehachse (21) angeordnet ist, die Lamellenbremse (16) zwischen der Anlage des Rades (19) und dem Planetengetriebe (3) angeordnet ist, wobei das Planetengetriebe (3) an der nach außen weisenden Seite angeordnet ist, und die Betätigungseinrichtung der Lamellenbremse (16) zwischen der Lamellenbremse (16) und dem Planetengetriebe (3) angeordnet ist.

2. Radantrieb nach Anspruch 1, **dadurch gekennzeichnet, daß** Außenlamellen (11) mit dem Hohlrad (6) in Verbindung stehen.

3. Radantrieb nach Anspruch 1, **dadurch gekennzeichnet, daß** die Lamellenbremse (16) zwischen der Anlage des Rades (19) und dem Planetengetriebe (3) angeordnet ist.

4. Radantrieb nach Anspruch 1, **dadurch gekennzeichnet, daß** ein Kolben (9) in dem Hohlrad (6), welches als ein Zylinder (8) ausgebildet ist, angeordnet ist.

5. Radantrieb nach Anspruch 1, **dadurch gekennzeichnet, daß** Zuführungen (15) zur Betätigung eines Kolbens (9) in der Radnabe (7) und dem Hohlrad (6) angeordnet sind.

6. Radantrieb nach Anspruch 4, **dadurch gekennzeichnet, daß** der Kolben (9) ein Ringkolben ist.

7. Radantrieb nach Anspruch 4, **dadurch gekennzeichnet, daß** der Kolben (9) ein Stufenkolben ist.

8. Radantrieb nach Anspruch 1 **dadurch gekennzeichnet, daß** der Planetenträger (5) die Lamellenbremse (16) und das Planetengetriebe (3) glockenförmig umschließt.

## Claims

1. Wheel drive with integrated, hydraulically actuated multi-disk brake (16), with internal disks (12) and external disks (11), with a support for a wheel (19) with at least one planet gear (3) with a driven internal planet wheel (2) and a planet carrier (5) with an output flange (14) as a drive unit and a ring gear (6) that is non-rotationally linked with a non-rotational wheel hub (7) which is arranged so as to rotate about a steering pivot (21), whereby the inner disks (12) are linked with the rotary output flange (14) and the external disks (11) are linked with the wheel hub (7), **characterized in that** the surface of the wheel (19) is arranged between the multiple disk brake (16) and the steering pivot (21), the multi-disk brake (16) is arranged between the surface of the wheel (19) and the planet gear (3), whereby the planet gear (3) is externally arranged and the actuating unit of the multi-disk brake (16) is arranged between the multi-disk brake (16) and the planet gear (3).

2. Wheel drive according to claim 1, **characterized in that** the external disks (11) communicate with the ring gear (6) .

3. Wheel drive according to claim 1, **characterized in that** the multi-disk brake (16) is arranged between the wheel rim (19) and the planetary gear (3).

4. Wheel drive according to claim 1, **characterized in that** a piston (9) is arranged inside the ring gear (6) forming a cylinder (8).

5. Wheel drive according to claim 1, **characterized in that** the feeding (15) is arranged in the wheel hub (7) and ring gear (6) to actuate the piston (9).

6. Drive wheel according to claim 4, **characterized in that** the piston (9) is an annular piston.

7. Wheel drive according to claim 4, **characterized in that** the piston (9) is a step piston.

8. Wheel drive according to claim 1, **characterized in that** the bell-shaped planet carrier (5) encloses the multi-disk brake (16) and the planetary gear (3).

## Revendications

1. Moteur de roue équipé d'un frein à disques intégré à commande hydraulique (16), doté de disques intérieurs (12) et de disques extérieurs (11), d'un logement d'un pignon (19) avec au moins un groupe planétaire (3), conçu de façon à ce qu'une roue intérieure centrale (2) puisse être entraînée et à ce que un porte-satellites (5) forme ensemble avec un manchon de sortie (14) la sortie, et doté d'une couronne (6) fixée de façon solidaire en rotation à un moyeu de roue fixe (7), lequel est disposé de manière orientable au moyen d'un pivot de direction (21), sachant que les disques intérieurs (12) sont reliés au manchon de sortie orientable (14) et les disques extérieurs (11) sont reliés au moyeu de roue (7), **caractérisé en ce que** le logement du pignon (19) est positionné entre le frein à disques (16) et le pivot de direction (21), **en ce que** le frein à disques (16) est logé entre le logement du pignon (19) et le groupe planétaire (3), sachant que le groupe planétaire (3) est logé sur le coté orienté vers l'extérieur et **en ce que** le dispositif d'actionnement du frein à disques (16) est logé entre le frein à disques (16) et le groupe planétaire (3).

2. Moteur de roue selon la revendication 1, **caractérisé en ce que** les disques extérieurs (11) sont reliés à la couronne (6).

3. Moteur de roue selon la revendication 1, **caractérisé en ce que** le frein à disques (16) est logé entre le logement du pignon (19) et le groupe planétaire (3).

4. Moteur de roue selon la revendication 1, **caractérisé en ce qu**'un piston (9) est logé dans la couronne (6) réalisée sous forme d'un cylindre (8).

5. Moteur de roue selon la revendication 1, **caractérisé en ce que** des canaux d'amenée (15) pour l'actionnement du piston (9) sont logés dans le moyeu de roue (7) et dans la couronne (6).

6. Moteur de roue selon la revendication 4, **caractérisé en ce que** le piston (9) est un piston annulaire.

7. Moteur de roue selon la revendication 4, **caractérisé en ce que** le piston (9) est un piston différentiel.

8. Moteur de roue selon la revendication 1, **caractérisé en ce que** le porte-satellites (5) entoure le frein à disques (16) et le groupe planétaire (3) en forme de cloche.
